# FASCICULE DE BREVET EUROPEEN

(11) **EP 1 361 918 B1**
(45) Date de publication et mention de la délivrance du brevet: **29.12.2004**
(21) Numéro de dépôt: 01907821.1
(22) Date de dépôt: 16.02.2001
(51) Int. Cl.: B01J 2/00, F26B 11/02

(54) **PROCEDE DE FABRICATION DE GRANULES**
VERFAHREN ZUR HERSTELLUNG VON GRANULATEN
METHOD FOR MAKING GRANULES

(30) Priorité: 16.11.2000 FR 0014918
(43) Date de publication de la demande: 19.11.2003
(73) Titulaire: Bionatec S.A., 06410 Biot (FR)
(72) Inventeur: MATHONNET, Jean-Pierre, c/o Cabinet Hautier, F-06000 Nice (FR); ZANNINI, Gaetano, c/o Cabinet Hautier, F-06000 Nice (FR)
(74) Mandataire: Hautier, Jean-Louis
(86) Numéro de dépôt international: PCT/FR2001/000462
(87) Numéro de publication internationale: WO 2002/040144

(56) Documents cités:
- WO-A-91/09989
- WO-A-97/04861
- DE-A- 19 904 657
- FR-A- 2 132 521

## Description

La présente invention concerne un procédé de fabrication de granules qui pourra trouver son application notamment pour un usage aromatique, cosmétique, alimentaire ou encore diététique.

Dans ce domaine, on connaît déjà du document WO-A-97/04861 un procédé de fabrication de granules solides renfermant des substances aromatiques, alimentaires ou diététiques à usage cosmétique.

Ce procédé antérieur consiste : à réaliser un noyau faisant office de support, constitué d'excipients associés ou non à des substances actives, à recouvrir le noyau en trois étapes d'au moins une couche, ces trois étapes étant réalisées pour chaque couche successive par :
- enrobage du noyau par des substances actives associées ou non d'excipients,
- séchage de la couche,
- tamisage du noyau recouvert.

Les granules obtenus par ce type de procédé sont particulièrement avantageux et peuvent constituer des granules à croquer, à sucer, à avaler ou à dissoudre et pourront contenir des extraits végétaux et des huiles essentielles (ou autres).

Bien que donnant de bons résultats, le procédé selon le document WO-A-97/04861 est perfectible car il manque de productivité.

Le problème principal posé par ce document antérieur est le temps de fabrication des granules qui est beaucoup trop important.

En effet, les temps de tamisage et de séchage sont longs. Le gain de temps se situe au niveau de la diminution du nombre de tamisages, à l'absence de transferts turbine-tamis sécheur et au séchage dynamique des granules beacoup plus rapide.

Par ailleurs, l'étape de séchage nécessite un transfert de granules dans une étuve ce qui correspond à une étape supplémentaire qui ajoute un temps de transfert au temps général de fabrication.

La présente invention permet de remédier aux inconvénients des techniques actuelles et présente pour ce faire un procédé amélioré.

En premier lieu, ce procédé permet de raccourcir considérablement le temps de fabrication des granules.

Pour y parvenir, l'invention a l'avantage de supprimer l'étape de transfert dans une étuve pour réaliser le séchage, ainsi que la plupart des tamisages.

A cet effet, le séchage s'effectue dans le même milieu que l'enrobage du noyau, dans une turbine.

Par ailleurs, le procédé ici proposé, a l'avantage de mettre en oeuvre différentes étapes successives pour le séchage ce qui permet de l'optimiser.

En particulier, un séchage à coeur est débuté lorsque l'enrobage du noyau a été réalisé et ce, à température modérée.

Une fois ce séchage fondamental réalisé, un séchage plus fort est effectué puis une redescente en température pour un troisième séchage, sous un flux chauffé à température modérée.

L'utilisation de telles étapes de séchage a l'avantage de réaliser une montée en température progressive des granules ce qui permet de supprimer tout choc thermique et partant d'améliorer sensiblement la qualité de fabrication.

Un autre avantage de l'invention est que le séchage est réalisé dans une turbine ce qui prolonge le cycle de mise en rotation des granules.

De cette façon, on assure une sphéricité et une homogénéité granulométrique encore meilleures des granules obtenus et on réduit le nombre de tamisages nécessaire.

D'autres buts et avantages apparaîtront au cours de la description qui suit.

La présente invention concerne un procédé de fabrication de granules notamment à usage aromatique, cosmétique, alimentaire ou diététique, consistant à enrober dans une turbine un noyau d'au moins une couche d'enrobage constituée au moins d'une solution, puis à sécher le noyau recouvert, après chaque nouvel enrobage, caractérisé par le fait que le séchage s'effectue dans la turbine en fonctionnement et comprend les phases suivantes :
- séchage doux par projection d'un flux gazeux tiède correspondant à une température entre 25°C et 35°C ;
- séchage fort par projection d'un flux gazeux chaud correspondant à une température entre 40°C et 50°C ;
- séchage terminal par projection d'un flux gazeux tiède correspondant à une température entre 25°C et 35°C.

Ce procédé comportera, selon des variantes préférées de l'invention, les étapes suivantes :
- il comporte, après le séchage, une phase de refroidissement jusqu'à la température ambiante ;
- le flux gazeux est un flux d'air purifié et filtré ;
- on utilise pour constituer chaque couche d'enrobage :
   - une solution collante,
   - une poudre micronisée ;
- pour chaque couche d'enrobage, on pulvérise la solution collante sur le noyau et on effectue une pause permettant l'imprégnation du noyau, avant le dépôt de la poudre micronisée ;
- on effectue un tamisage des granules uniquement en fin d'opération ;
- le noyau et/ou les couches d'enrobage comprennent au moins une substance active.

Le type de granules obtenues par le procédé selon l'invention n'est pas limité et on pourra se référer à la demande de brevet WO 97/04861 en ce qui concerne quelques exemples de réalisation et de composition particulière.

D'une façon générale, le procédé consiste, à partir d'un noyau de base, à réaliser différentes couches d'enrobage superposées.

Au moins une couche est nécessaire mais plusieurs couches sont généralement réalisées.

Comme cela existe déjà dans l'état de la technique, l'enrobage selon l'invention met en oeuvre pour le moins une solution.

Une fois que le noyau est imprégné par la solution, la couche de solution déposée peut être séchée suivant une étape de séchage.

Après séchage, on peut réaliser si nécessaire un nouvel enrobage par un nouveau dépôt de la solution sur la périphérie du noyau.

Selon l'invention, le séchage mis en oeuvre est réalisé dans une turbine qui est la même que la turbine ayant servi à enrober le noyau.

Par ailleurs, on maintient la turbine en rotation de façon à poursuivre le mouvement des granules ce qui optimise fortement la circulation du flux gazeux servant au séchage.

A ce sujet, le séchage mis en oeuvre comprend plusieurs étapes différenciées notamment suivant la température du flux gazeux qui est projeté sur les granules.

Dans un premier temps, un séchage doux est réalisé par projection d'un flux gazeux tiède.

On entend par le terme tiède, une température comprise entre 25°C et 35°C.

Cette étape de séchage doux permet un séchage à coeur et donc en profondeur du granule ainsi enrobé et assure une montée progressive en température du granule.

Dans un deuxième temps, un séchage plus fort est réalisé par projection d'un flux gazeux chaud.

Le terme chaud s'entend d'une température de flux gazeux comprise entre 40°C et 50°C.

Cette étape à température plus élevée augmente la rapidité du séchage du granule.

En particulier, la couche de solution déposée sera plus rapidement fixée suivant cette étape.

Dans un troisième temps, un séchage terminal est réalisé en projetant un flux gazeux à nouveau tiède, c'est-à-dire dans une température comprise entre 25°C et 35°C.

Pour des raisons de simplicité, on pourra utiliser un flux à même température que celui utilisé pour le séchage doux préliminaire.

Le séchage terminal permet de redescendre progressivement la température des granules avant, préférentiellement, une étape de refroidissement jusqu'à la température ambiante.

Cette étape de refroidissement peut être réalisée sous un flux d'air à température ambiante, c'est-à-dire sensiblement autour de 20°C.

De façon préférée, les flux gazeux projetés sur les granules sont des flux d'air.

Lorsque le refroidissement est obtenu, on peut renouveler les phases d'enrobage et de séchage autant que nécessaire.

Le tamisage des granules n'est plus nécessaire après chaque enrobage. Seuls quelques tamisages, voire un seul tamisage en fin d'opération est effectué.

De façon préférée, la couche d'enrobage utilisée dans le présent procédé de fabrication est composée à partir de deux composants dans des phases différentes.

En effet, en plus de la solution employée qui, selon cette variante, sera une solution aux propriétés collantes, on utilise une poudre micronisée.

La poudre micronisée a une fonction supplémentaire qui est de donner rapidement un volume important aux granules.

La poudre micronisée coopère avec la solution collante en venant se fixer sur celle-ci.

Ainsi, à chaque couche d'enrobage, on pourra pulvériser la solution collante sur le noyau puis après une pause éventuelle, effectuer le dépôt de la poudre micronisée.

A titre d'exemple, le procédé de fabrication ici présenté pourra être mis en oeuvre en utilisant un noyau à base de maltitol ou encore un mélange de bicarbonate de sodium et de citrate. Il pourra également s'agir de grains de pollen.

Toujours à titre d'exemple, la solution collante selon l'invention pourra comprendre des huiles essentielles, de l'émulgine ainsi que du luviskol (marque déposée par la société BASF Aktiengesellschaft). De l'acide citrique pourra également être présent.

En ce qui concerne la poudre micronisée, il pourra également s'agir de maltitol.

D'une façon générale, mais selon les applications, le noyau et/ou les couches d'enrobage (au niveau de la poudre micronisée ou de la solution collante) comprendront une ou plusieurs substances actives.

Il pourra s'agir d'extraits fluides ou d'huiles essentielles par exemple.

Concernant les temps de séchage, l'exemple suivant illustre la rapidité du cycle, pour une fabrication de 5 kg de granules dans une turbine d'essais :
- séchage doux : 1 minute à 30°C
- séchage fort : 2 minutes à 45°C
- séchage doux terminal : 1 minute à 30°C.

Puis, un refroidissement à température ambiante de 5 minutes a été opéré.

Le dépôt de la couche d'enrobage par imprégnation a quant à elle pris un temps de 5 minutes, avant le séchage.

Au total, l'enrobage par une couche a pris 15 minutes au lieu d'environ 2h30 selon l'état de la technique antérieur.

## Revendications

1. Procédé de fabrication de granules notamment à usage aromatique, cosmétique, alimentaire ou diététique, consistant à enrober dans une turbine un noyau d'au moins une couche d'enrobage constituée au moins d'une solution, puis à sécher le noyau recouvert, après chaque nouvel enrobage, **caractérisé par le fait**
**que** le séchage s'effectue dans la turbine en fonctionnement et comprend les phases suivantes :
- séchage doux par projection d'un flux gazeux tiède correspondant à une température entre 25°C et 35°C ;
- séchage fort par projection d'un flux gazeux chaud correspondant à une température entre 40°C et 50°C ;
- séchage terminal par projection d'un flux gazeux tiède correspondant à une température entre 25°C et 35°C.

2. Procédé de fabrication de granules selon la revendication 1 **caractérisé par le fait**
**qu'**il comporte, après le séchage, une phase de refroidissement jusqu'à la température ambiante.

3. Procédé de fabrication de granules selon l'une quelconque des revendications 1 ou 2 **caractérisé par le fait**
**que** le flux gazeux est un flux d'air purifié et filtré.

4. Procédé de fabrication de granules selon l'une quelconque des revendications 1 à 3, **caractérisé par le fait**
**qu'**on utilise pour constituer chaque couche d'enrobage :
- une solution collante ;
- une poudre micronisée.

5. Procédé de fabrication de granules selon la revendication 4, **caractérisé par le fait**
**que** pour chaque couche d'enrobage, on pulvérise la solution collante sur le noyau et qu'on effectue une pause permettant l'imprégnation du noyau, avant le dépôt de la poudre micronisée.

6. Procédé de fabrication de granules selon l'une quelconque des revendications 1 à 5, **caractérisé par le fait**
**que** le noyau et/ou les couches d'enrobage comprennent au moins une substance active.

## Claims

1. Process for the production of granules in particular for fragrance, cosmetic, food or dietetic use, consisting in cladding, in a turbine, a core with at least one cladding layer constituted at least by a solution, then, after each new cladding, drying the covered core, **characterized in that**
the drying takes place in the operating turbine and comprises the following phases:
- gentle drying by projection of a warm gas flow at a temperature between 25°C and 35°C;
- strong drying, by projection of a hot gas flow at a temperature between 40°C and 50°C;
- final drying by projection of a warm gas flow at a temperature between 25°C and 35°C.

2. Process for the production of granules according to claim 1 **characterized in that**
it comprises, after drying, a cooling phase until the ambient temperature is reached.

3. Process for the production of granules according to any of claims 1 or 2 **characterized in that**
the gas flow is a flow of purified and filtered air.

4. Process for the manufacture of granules according to any of claims 1 to 3, **characterized in that**
there is used to constitute each cladding layer:
- a binding solution;
- a micronized powder.

5. Process for the production of granules according to claim 4, **characterized in that**
for each cladding layer, the binding solution is sprayed on the core and there is carried out a pause permitting the impregnation of the core, before the deposit of the micronized powder.

6. Process for the production of granules according to any of claims 1 to 5, **characterized in that**
the core and/or the cladding layers comprise at least one active substance.

## Patentansprüche

1. Verfahren zur Herstellung von Granulaten, vor allem für aromatische oder kosmetische Zwecke, für Nahrungsmittel oder Diätprodukte, bestehend darin, dass ein Kern in einer Turbine mit mindestens einer Schicht umhüllt wird, die aus mindestens einer Lösung besteht sowie in der anschließenden Trocknung des umhüllten Kerns nach jeder neuen Schicht, **gekennzeichnet dadurch,**
**dass** die Trocknung in der laufenden Turbine erfolgt und folgende Phasen umfasst :
- sanfte Trocknung durch Einleiten eines mäßig warmen Gasstroms mit einer Temperatur von 25°C bis 35°C,
- starke Trocknung durch Einleiten eines warmen Gasstroms mit einer Temperatur von 40°C bis 50°C,
- abschließende Trocknung durch Einleiten eines mäßig warmen Gasstroms mit einer Temperatur von 25°C bis 35°C.

2. Herstellungsverfahren für Granulaten gemäß Patentanspruch 1, **gekennzeichnet dadurch,**
**dass** es nach dem Trocknen eine Phase zur Abkühlung auf Raumtemperatur aufweist.

3. Herstellungsverfahren für Granulaten gemäß einem der Ansprüche 1 oder 2, **gekennzeichnet dadurch,**
**dass** der Gasstrom ein gereinigter und gefilterter Luftstrom ist.

4. Herstellungsverfahren für Granulaten gemäß einem der Ansprüche 1 bis 3, **gekennzeichnet dadurch,**
**dass** zur Bildung jeder Umhüllungsschicht
- eine klebende Lösung und
- ein mikronisiertes Pulver
verwendet werden.

5. Herstellungsverfahren für Granulaten gemäß Anspruch 4, **gekennzeichnet dadurch,**
**dass** für jede Umhüllungsschicht die klebende Flüssigkeit auf den Kern gesprüht wird, dann eine Pause vorgesehen ist, damit sie in den Kern einziehen kann, und dann der Auftrag des mikronisierten Pulvers erfolgt.

6. Herstellungsverfahren für Granulaten gemäß einem der Ansprüche 1 bis 5, **gekennzeichnet dadurch,**
**dass** der Kern und/oder die Umhüllungsschichten mindestens einen Wirkstoff enthalten.
